# EUROPEAN PATENT SPECIFICATION

(11) **EP 4 306 338 B1**
(45) Date of publication and mention of the grant of the patent: **17.06.2026**
(21) Application number: 22185054.8
(22) Date of filing: 14.07.2022
(51) Int. Cl.: B60C 23/04

(54) **A GROUND OBSTACLE SYSTEM, AN ECU AND A METHOD THEREIN FOR LOCATING TIRE SENSORS ON A VEHICLE**
BODENOBJEKTSYSTEM, ELEKTRONISCHES STEUERGERÄT UND VERFAHREN DARIN ZUR LOKALISIERUNG VON REIFENSENSOREN AUF EINEM FAHRZEUG
SYSTÈME D'OBSTACLE AU SOL, UNITÉ DE COMMANDE ÉLECTRONIQUE ET PROCÉDÉ ASSOCIÉ PERMETTANT DE LOCALISER DES CAPTEURS DE PNEU SUR UN VÉHICULE

(43) Date of publication of application: 17.01.2024
(73) Proprietor: VOLVO TRUCK CORPORATION, 405 08 Göteborg (SE)
(72) Inventor: IUSTIN, Roman, 435 37 Mölnlycke (SE)
(74) Representative: Zacco Sweden AB

(56) References cited:
- EP-A1- 2 818 339
- US-A1- 2010 179 724

## Description

### TECHNICAL FIELD

Embodiments herein relate in general to tire sensors in wheels on a vehicle. In particular, embodiments herein relate to a ground obstacle system for locating tire sensors of wheels on a vehicle. The embodiments herein also relate to an electronic control unit, ECU, and a method therein for locating tire sensors of wheels on a vehicle. The embodiments herein also relate to a computer program product for performing the method and a carrier of the same, as well as, a vehicle comprising the ECU.

### BACKGROUND

In vehicles today, in particular heavy-duty vehicles such as semi-trailer vehicles or trucks for cargo transport, one or more central electronic control units, ECUs, may be implemented on-board the vehicle in order to read and collect sensor readings from various different types of sensors on-board the vehicle. These sensor readings may comprise information indicating tire pressures, tire deformation, tire temperatures and identities of tire sensors located in or on the tires of the vehicle. These type of systems are conventionally referred to as Tire Pressure Monitoring Systems, TPMS, or Tire Health Systems, THS. TPMS/THS systems also normally employ Radio Frequency, RF, transmissions operating on specifically dedicated frequencies for transmitting the sensor data from the sensors to the on-board ECU or external sensor data receivers.

In a TPMS/THS system, each tire may have one or more integrated tire sensors. Each tire sensor has unique identity. During mounting of the tires, or re-mounting of the tires due to e.g. tire rotation, the TPMS/THS system needs to be informed about exactly in which wheel position on the vehicle each tire sensor is located. This is order for the ECU to have information about where on the vehicle each specific tire sensor and tire is located.

One way to determine a tire's wheel position, or the wheel positions of its tire sensors, on the vehicle is to manually determine the wheel positions and input this into the TPMS/THS system. Normally, this manual procedure is performed by selecting a specific wheel position via a display interface in which all wheel positions are shown, and then to hit the tire at the selected wheel position with a mallet or hammer in order to create a small pressure variation inside the tire. The small pressure variation may thus be sensed inside the tire by the tire sensor that sends a signal towards central ECUs of TPMS/THS system. Here, the identity of the tire sensor may be modulated or embedded into the signal. However, due to the human factor, this manual configuration might be prone to errors.

Another way to determine a wheel position on a vehicle for a tire sensor is described in US patent US 8,903,602 B2. US 8,903,602 B2 describe an auto-location method that requires readings from other sensors on the vehicle, such as, for example, Automatic Brake System, ABS, sensors. Additionally, it may also require placing transmission extenders on each side of the chassis of the vehicle in order to locate from which side of the vehicle, or tire, the signal was actually sent. Unfortunately, this method requires additional hardware to be installed on the vehicle, such as, TPMS/THS transmission extenders, ABS sensors and/or other vehicle sensors.

### [INSERT PAGE 2A]

### SUMMARY

It is an object of embodiments herein to provide a ground obstacle system, an ECU, an a method for locating tire sensors in wheels of a vehicle that seeks to mitigate, alleviate, or eliminate all or at least some of the above-discussed drawbacks of presently known solutions.

According to a first aspect of the invention, the object is achieved by a ground obstacle system for locating tire sensors of wheels on a vehicle. The ground obstacle system is adapted to cause tire deformation in tires of the wheels on a vehicle as the wheels of the vehicle traverses the ground obstacle system. The ground obstacles of the ground obstacle system are arranged in a determined geometric pattern that causes a determined set of sequential tire deformations in the tires of the wheels of the vehicle triggering sequential tire sensor readings by tire sensors in each tire or wheel of the vehicle.

By having a ground obstacle system as described above, it is ensured that each tire sensor of the vehicle will be activated in a certain order as the vehicle traverses the ground obstacle system and thus sequentially transmit their respective signals. Since this order may be predetermined or recognized, the sequential reception of these signals from the tire sensors may then be used to determine at which wheel position on the chassis of the vehicle each tire sensor is located. This also means that the time consuming use of manual diagnostic tools in workshops, which are also prone to human errors, may be eliminated. Hence, the locating of tire sensors of wheels on a vehicle is improved.
US2010/0179724A1 describes an auto-location of tires IDs on a multi-axle vehicle, wherein a pattern of obstacles may be placed along a vehicle travel path so that, as a vehicle passes over the obstacles, sensors associated with individual tires generate signals that may later be analyzed to determine tire locations on the vehicle.
EP2818339A1 describe a method of operating a tire pressure monitor system on a vehicle to determine a wheel location of wheels equipped with pressure sensors.

In some embodiments, the minimum distances between individual ground obstacles of the ground obstacle system may be adapted to the circumference of the wheel of the vehicle for which it is intended to be used. This means that the individual obstacles and the geometric pattern may be customized for a particular type of vehicle in order to ensure a correct triggering of the tire sensor signals for that particular type of vehicle. Here, according to some embodiments, the minimum distances may be about one fourth of the circumference of the wheels of the vehicle, or larger. This provides a common suitable range of distances in the vicinity of ¼ of the circumference of the wheel of the vehicle for which it may be adapted. This ensures that only the tire sensors of one wheel at the time will be activated as the vehicle traverses or passes over the geometric pattern of the ground obstacles system.

According to some embodiments, the one or more of the individual ground obstacles of the ground obstacle system may be movably arranged in order to adapt the distance between one or more individual ground obstacles of the ground obstacle system. This means that the individual obstacles and the geometric pattern may be customized for different types of vehicle from one time to another. This allows, for example, a workshop or maintenance station, to serve several different types of vehicles.

In some examples not according to the claimed invention, the ground obstacle system may be integrated into a ground surface arranged to be traversed by the wheels of the vehicle. Optionally, according to some examples not according to the claimed invention, the ground obstacle system may be comprised in a movable ground surface cover configured to be traversed by the vehicle. According to another option, the ground obstacle system may, according to the invention, be arranged in cylindrical rollers arranged to support the tires as the wheels traverses the surface of the cylindrical rollers. This means that the ground obstacle system may be implemented in several different type of ways in order to best suit the needs of its user. Further, in some examples not according to the claimed invention, individual ground obstacles of the ground obstacle system may be portable stand-alone units in the shape of triangular cones, truncated cones or half spheres to be place in front of the vehicle in accordance with the determined geometric pattern. This means that the ground obstacle system may be a portable system of individual ground obstacles that may be carried on-board the vehicle, and thus be flexibly used independently of the current location of the vehicle. Here, the ground obstacle system may also comprise vehicle specific instructions indicating a suitable geometric pattern for the specific vehicle. These may, for example, be provided in digital form in an onboard user system, user equipment, mobile phone, etc., or by written instructions.

In some embodiments, the tire sensors on the vehicle are tire pressure and/or tire deformation sensors, such as, e.g. Tire Pressure Monitor System/Tire Health System, TPMS/THS, sensors. This means that both air and airless tires may be used by the vehicle.

### BRIEF DESCRIPTION OF THE DRAWINGS

Features and advantages of the embodiments will become readily apparent to those skilled in the art by the following detailed description of exemplary embodiments thereof with reference to the accompanying drawings, wherein:
- Fig. 1: is a schematic illustration of a vehicle and wheel positions,
- Fig. 2: is a schematic illustrations of a vehicle having tires comprising tire sensors at each wheel position,
- Fig. 3: is a schematic illustration of a ground obstacle system for locating tire sensors in a wheel of a vehicle according to some embodiments,
- Fig. 4: is a schematic illustration of a further embodiment of a ground obstacle system for locating tire sensors in a wheel of a vehicle,
- Fig. 5: is a schematic illustration of yet a further embodiment of a ground obstacle system for locating tire sensors in a wheel of a vehicle,
- Fig. 6: is a flowchart illustrating embodiments of a method for locating tire sensors in a wheel of a vehicle in a tire sensor pairing system,
- Fig. 7: is a schematic illustration of an ECU for locating tire sensors in a wheel of a vehicle according to some embodiments, and
- Fig. 8: is a number of examples of vehicle tire configurations on which a ground obstacle system for locating tire sensors in a wheel of a vehicle may be based.

### DETAILED DESCRIPTION

Embodiments will now be described more fully hereinafter with reference to the accompanying figures. The figures are schematic and simplified for clarity, and they merely show details which are essential to the understanding of the embodiments presented herein, while other details have been left out. Throughout, the same reference numerals are used for identical or corresponding parts or steps. It is to be understood that the embodiments described herein should not be construed as limiting to the aspects set forth herein; rather, these embodiments are provided by way of example so that this disclosure will be thorough and complete, and will fully convey the scope of the appended claims to those skilled in the art.

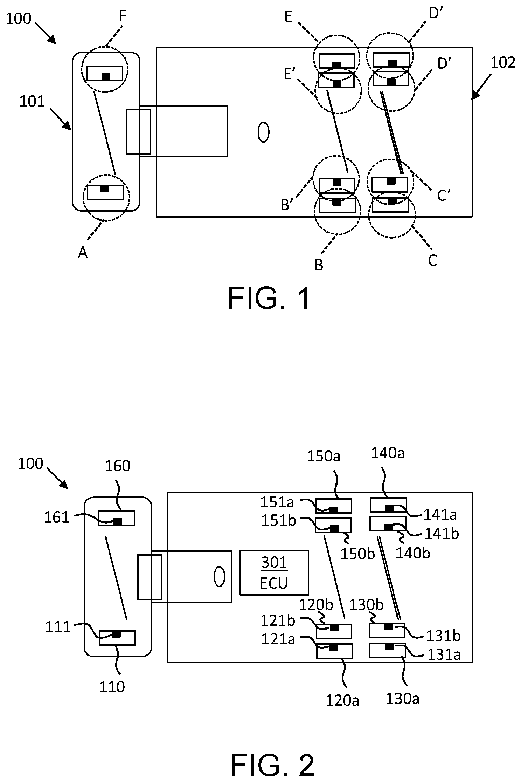

**Fig. 1** illustrates a first top-side view of a vehicle 100 and wheel positions A-F thereon. In this case, the vehicle 100 is exemplified as a heavy-duty vehicle combination for cargo transport. The vehicle 100 in Fig. 1 comprises a truck or towing vehicle 101 configured to tow a trailer unit 102 in a known manner, e.g., by a fifth wheel connection. Herein, a heavy-duty vehicle is taken to be a vehicle designed for the handling and transport of heavier objects or large quantities of cargo. As an example, a heavy-duty vehicle could be a semi-trailer vehicle, or a truck as described above. As another example, a heavy-duty vehicle could be a vehicle designed for use in construction, mining operations, and the like. It is appreciated that the techniques and devices disclosed herein can be applied together with a wide variety of electrically powered vehicle units, not just those exemplified in Fig. 1. Thus, the techniques disclosed herein are also applicable to, e.g., rigid trucks and also multi-trailer electric heavy-duty vehicles comprising one or more dolly vehicle units. Thus, even though the embodiments herein for locating tire sensors on a vehicle are described mainly with respect to heavy-duty vehicles, such as., e.g. semi-trailer vehicles or trucks for cargo transport, the embodiments herein should not be considered restricted to this particular type of vehicle but may also be used in other types of vehicles, such as, e.g. a conventional passenger vehicles with four wheels.

In this example, the wheel position A is the front left wheel position of the truck or towing vehicle 101 of the vehicle 100, while the wheel position F is the front right wheel position of the truck or towing vehicle 101 of the vehicle 100. Furthermore, the wheel positions of the trailer unit 102 ranges around the trailer unit 102 from the wheel position B for the front left tire of the trailer unit 102 to the wheel position E of the front right tire of the trailer unit 102. In this example, each wheel positions B-E may comprise a set of twin wheels as illustrated in Fig. 1. In this case, the outermost wheel position of the set of twin wheels is referred to as B, C, D, and E, respectively, while the innermost wheel position of the set of twin wheels is referred to as B', C', D', and E'. It should also be noted that the notation of the wheel positions is merely made for sake of illustrative purposes to provide a clear and concise references to different wheel positions; in other words, this notation should not be construed as limiting to the embodiments herein.

**Fig. 2** illustrates a second top-side view of the vehicle 100 having tires 110, 120, 130, 140, 150, 160 comprising tire sensors 111, 121, 131, 141, 151, 161 at each wheel position A-F on the vehicle 100 as described above in Fig. 2. The vehicle 100 also comprise an electronic control unit, ECU 301.

In this example, the tire 110 at the wheel position A of the truck or towing vehicle 101 of the vehicle 100 comprise at least one tire sensor 111, while the tire 160 at the wheel position F of the truck or towing vehicle 101 of the vehicle 100 comprise at least one tire sensor 161. Similarly, each tire 120a, 120b at the front left wheel position B, B' of the trailer unit 102 of the vehicle 100 comprise each at least one tire sensor 121a, 121b, respectively. Also, each tire 130a, 130b at the rear left wheel positions C, C' of the trailer unit 102 of the vehicle 100 comprise each at least one tire sensor 131a, 131b, respectively. Furthermore, each tire 140a, 140b at the rear right wheel positions D, D' of the trailer unit 102 of the vehicle 100 comprise each at least one tire sensor 141a, 141b. Lastly, each tire 150a, 150b at the front right wheel positions E, E' of the trailer unit 102 of the vehicle 100 comprise each at least one tire sensor 151a, 151b.

The ECU 301 and each of the one or more tire sensors 111, 121, 131, 141, 151, 161 on the vehicle 100 may be part of an on-board Tire Pressure Monitor System/Tire Health System, TPMS/THS. In other words, the one or more tire sensors 111, 121, 131, 141, 151, 161 on the vehicle 100 may be TPMS/THS sensors, and the ECU 301 may be a TPMS/THS sensor reader. The one or more tire sensors 111, 121, 131, 141, 151, 161 on the vehicle 100 may also be referred to as TPMS/THS transponders. Further, the one or more tire sensors 111, 121, 131, 141, 151, 161 on the vehicle 100 may be tire pressure and/or tire deformation sensors.

As part of the developing of the embodiments described herein, it has been realized that ordinary TPMS/THS system on-board a vehicle 100 conventionally requires active driving on roads and reaching specific speeds, before all necessary tire sensor readings are obtained. This is due to the fact that TPMS/THS system also relies on speed sensor readings from, e.g. an on-board Automatic Brake System, ABS, system. This information is then combined with internal wheel speeds and rotation directions from accelerometer readings that may be integrated in tire sensors. This means, for example, that for a factory that mounts or installs the TPMS/THS system on the vehicle 100 for the first time, or an automotive workshop that mounts or installs new tires, will need to diagnose the TPMS/THS system in order to assess if the mounting/installation was successful. However, this confirmation will only be available after driving the vehicle 100 a certain period of time. This problem is addressed by the embodiments described herein. For example, this information may instead be obtained from a ground obstacle system and an ECU as described below.

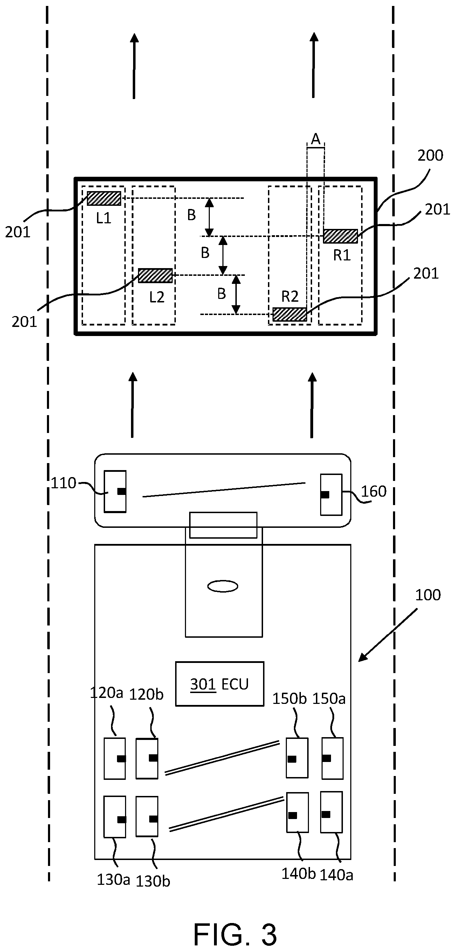

**Fig. 3** shows a schematic illustration of an embodiment of a **ground obstacle system 200** and an exemplary use of thereof. The ground obstacle system 200 comprises a number of individual ground obstacles 201 arranged in a geometric pattern. According to the geometric pattern, the individual obstacles 201 may be arranged in different wheel zones L1, L2, R1, R2 which corresponds to the inner and outer wheels of a drive axle of a vehicle 100. The individual obstacles 201 may, for example, be adjustably arranged in the ground obstacle system 200 such that their location perpendicular to the travel direction of the vehicle 100 may be adapted to different vehicles and/or drive axle widths. The adjustment may be performed such that inner and outer wheels of a drive axle of a vehicle will not traverse the same individual ground obstacle 201. For example, the distance A between the individual obstacle 201 in zone R1 and the individual obstacle 201 in zone R2 in Fig. 3 may be adjusted.

Further, according to the geometric pattern, the individual obstacles 201 may be arranged such that the distance B between each of the individual ground obstacles 201 in the travel direction of the vehicle 100 may be adapted to the circumference of the wheels of the vehicle 100. According to one example, the distance B may in some case suitably be about a fourth (¼) of the circumference of the wheels of the vehicle 100, or larger. In particular, for a commercial vehicle (CV), an average diameter of a wheel is 1 meter (m), which gives the wheel a circumference of 3.14 m. Therefore, for a CV, distance B between two individual obstacles 201 in the travelling directions of the vehicle 100 may suitably be 0.785 m or larger, i.e. the minimum distance or distance B > 0.785 m.

In the example shown in Figs. 1-3, the vehicle 100 is a so-called 6x4 truck having a front steering axle with 2 wheels and two rear drive axles each with an inner and outer wheel on each side. As the vehicle 100 traverses the ground obstacle system 200, the following signal sequence, or tire sensor readings, will be triggered for the tire sensors in the wheels of the vehicle 100 by the geometric pattern of the individual obstacles 201 of the ground obstacle system 200:
- front right at R1, i.e. the front right wheel 160 of the steering axle rolls over the individual obstacle 201 in zone R1 causing the tire sensor 161 to activate and transmit its signal to the ECU 130;
- front left at L1, i.e. the front left wheel 110 of the steering axle rolls over the individual obstacle 201 in zone L1 causing the tire sensor 111 to activate and transmit its signal to the ECU 130;
- inner right at R2, i.e. the inner right wheel 150b of the first drive axle rolls over the individual obstacle 201 in zone R2 causing the tire sensor 151b to activate and transmit its signal to the ECU 130;
- inner left at L2, i.e. the inner left wheel 120b of the first drive axle rolls over the individual obstacle 201 in zone L2 causing the tire sensor 121b to activate and transmit its signal to the ECU 130;
- outer right at R1, i.e. the outer right wheel 150a of the first drive axle rolls over the individual obstacle 201 in zone R1 causing the tire sensor 151a to activate and transmit its signal to the ECU 130;
- outer left at L1, i.e. the outer left wheel 120a of the first drive axle rolls over the individual obstacle 201 in zone L1 causing the tire sensor 121a to activate and transmit its signal to the ECU 130;
- inner right at R2, i.e. the inner right wheel 130b of the second drive axle rolls over the individual obstacle 201 in zone R2 causing the tire sensor 131b to activate and transmit its signal to the ECU 130;
- inner left at L2, i.e. the inner left wheel 140b of the second drive axle rolls over the individual obstacle 201 in zone L2 causing the tire sensor 141b to activate and transmit its signal to the ECU 130;
- outer right at R1, i.e. the outer right wheel 140a of the second drive axle rolls over the individual obstacle 201 in zone R1 causing the tire sensor 141a to activate and transmit its signal to the ECU 130;
- outer left at L1, i.e. the outer left wheel 130a of the second drive axle rolls over the individual obstacle 201 in zone L1 causing the tire sensor 131a to activate and transmit its signal to the ECU 130.

It should here be noted that the speed with which the vehicle 100 traverses the ground obstacle system 200 should preferable be adapted in order to get enough time for the one or more tire sensors 111, 121, 131, 141, 151, 161 to obtain and transmit its sensor readings. For example, if a tire sensor in a TPMS require about 1 second (s) in order to get a sensor reading, then the speed of the vehicle 100 should preferably not be faster than 0.8 m/s; assumed that the minimum distance between tire sensor readings is a fourth of the distance of the circumference of the wheel of the vehicle 100.

Furthermore, it should also be noted that the ground obstacle system 200 may, for example, be located in the entry and/or exit of a workshop or maintenance station. If located at both the entry and exit, then the same sequence will be repeated on entry and on exit. However, if the workshop has a single entry and exit, whereby the vehicle reverses out of the workshop upon exit, the sequence will still be the same but mirrored backwards.

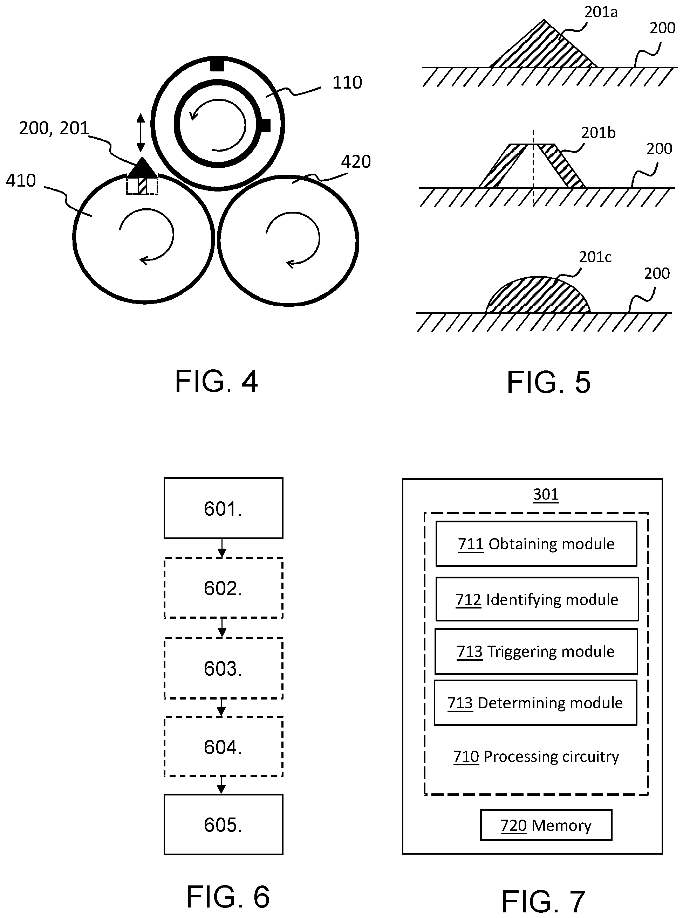

**Fig. 4** illustrates the ground obstacle system 200 arranged on or in **cylindrical rollers 410, 420** arranged to support the wheels 110, 120, 130, 140, 150, 160 of the vehicle 100 according to some embodiments. Here, it should be noted that, in some embodiments, the ground obstacle system 200 may be built into any form of rotating means, such as, e.g. the cylindrical rollers 410, 420, adapted to carry the vehicle 100 while rotating the wheels 110, 120, 130, 140, 150, 160 of the vehicle 100. Here, the individual ground obstacles 201 of the ground obstacle system 200 may be arranged onto the rotating means in order to generate the determined geometric pattern beneath wheels 110, 120, 130, 140, 150, 160 of the vehicle 100 while rolling. Optionally, the individual ground obstacles 201 of the ground obstacle system 200 may be arranged to alternately protrude from the rotating means or be retained within the rotating means in order to form the determined geometric pattern beneath wheels 110, 120, 130, 140, 150, 160 of the vehicle 100 while rolling. For example, the rotating means could conventionally be used to run speed test inside a test chamber or during balancing a wheel at an automotive workshop, e.g. a dynamometer station.

**Fig. 5** illustrates different types of shapes of each individual ground obstacle 201 according to different embodiments. For example, in some embodiments, each individual ground obstacle 201 may be portable stand-alone units in the shape of triangular cones 201a, truncated cones 201b or half spheres 201c to be placed in front of the vehicle 100 in accordance with the determined geometric pattern. For embodiments wherein the ground obstacle system 200 is integrated into a ground surface arranged to be traversed by the wheels 110, 120, 130, 140, 150, 160 of the vehicle 100 or comprised in a movable ground surface cover configured to be traversed by the vehicle 100, each of the individual ground obstacles 201 may be any of the shapes named above or have other suitable configurations. The size of each individual ground obstacle 201 should however preferable be large enough to cause a tire pressure or tire deformation change that is large enough to be detected by the tire sensors in the wheels 110, 120, 130, 140, 150, 160 of the vehicle 100.

Examples of embodiments of a method performed by an electronic control unit, ECU 301, for locating tire sensors 111, 121, 131, 141, 151, 161 of wheels 110, 120, 130, 140, 150, 160 on a vehicle 100, will now be described with reference to the flowchart depicted in **Fig. 6.** Fig. 6 is an illustrated example of actions or operations which may be taken by the ECU 301. The method may comprise the following actions.

**Action 601.** The ECU 301 obtains a tire sensor reading from each of the tire sensors 111, 121, 131, 141, 151, 161 in a determined sequential order. This means, for example, that each of the tire sensors 111, 121, 131, 141, 151, 161 has been activated by the ground obstacle system 200 as it is traversed by the vehicle 100, and thus transmitted their sensor readings to the ECU 301 in a certain order determined by the geometric pattern of the ground obstacle system 200.

**Action 602.** Optionally, after obtaining the tire sensor readings from each of the tire sensors 111, 121, 131, 141, 151, 161 in a determined sequential order according to Action 601, the ECU 301 may identify that the tire sensor readings from each of the tire sensors 111, 121, 131, 141, 151, 161 has been received in a sequential order that correspond to a determined order comprised in the ECU 301. This means, for example, that the ECU 301 may recognize the order of the received sequence of tire sensor readings by comparing it with a stored order of tire sensor readings.

**Action 603.** After the identification in Action 602, the ECU 301 may trigger the determination of the wheel position A-F on the vehicle 100 associated with each of the tire sensors 111, 121, 131, 141, 151, 161 based on the identification. This means, for example, that the ECU 301 may automatically start to locate the tire sensors 111, 121, 131, 141, 151, 161 of wheels 110, 120, 130, 140, 150, 160 on the vehicle 100 upon recognizing and identifying the determined sequential order in Action 602.

**Action 604.** Optionally, the ECU 301 may trigger the determination of the wheel position A-F on the vehicle 100 associated with each of the tire sensors 111, 121, 131, 141, 151, 161 based on an obtained input signal. This means, for example, that the ECU 301 may receive an explicit trigger signal to start the determination of the location of the tire sensors 111, 121, 131, 141, 151, 161 of the wheels 110, 120, 130, 140, 150, 160 on the vehicle 100. For example, a driver or service personnel may provide a trigger signal manually directly from a system on-board the vehicle 100 or remotely from outside of the vehicle 100.

**Action 605.** After obtaining the tire sensor readings in a determined sequential order in Action 601, the ECU 301 determines the wheel position A-F on the vehicle 100 associated with each of the tire sensors 111, 121, 131, 141, 151, 161 based on the sequential order in which the tire readings was obtained. Here, since the order of the transmissions from each tire sensor 111, 121, 131, 141, 151, 161 is determined by the geometric pattern of the ground obstacle system 200, the sequential order in which these signals are received by the ECU 301 from the tire sensors 111, 121, 131, 141, 151, 161 may be used to determine at which wheel location A-F on the chassis of the vehicle 100 each tire sensor 111, 121, 131, 141, 151, 161 is located.

**Fig. 7** shows an example of an electronic control unit, ECU 301, for locating tire sensors 111, 121, 131, 141, 151, 161 of wheels 110, 120, 130, 140, 150, 160 on a vehicle 100, wherein the ECU 301 is configured to receive tire sensor readings from the tire sensors 111, 121, 131, 141, 151, 161. The ECU 301 may be a part of an on-board tire pressure and/or tire deformation monitoring system, such as, e.g. a TPMS/THS system.

The ECU 301 may comprise a **processing circuitry 710** and a **memory 720.** It should also be noted that some or all of the functionality described in the embodiments herein as being performed by the ECU 301 may be provided by the processing circuitry 710 executing instructions stored on a computer-readable medium, such as, the memory 720 shown in Fig. 7. Furthermore, the processing circuitry 710 may further comprise additional components, such as, for example, an **obtaining module 711,** an **identifying module 712,** a **triggering module 713,** and a **determining module 714,** each responsible for providing its functionality to support the embodiments described herein. The ECU 301 or processing circuitry 610 is configured to, or may comprise the obtaining module 711 configured to, receive RF signals from the tire sensors 111, 121, 131, 141, 151, 161 of the wheels 110, 120, 130, 140, 150, 160.

The ECU 301 or processing circuitry 710 is configured to, or may comprise the obtaining module 711 configured to, obtain a tire sensor reading from each of the tire sensors 111,121, 131, 141, 151, 161 in a determined sequential order. Also, the ECU 301 or processing circuitry 710 is configured to, or may comprise the determining module 714 configured to, determine the wheel position A-F on the vehicle 100 associated with each of the tire sensors 111, 121, 131, 141, 151, 161 based on the determined sequential order in which the tire sensor readings was obtained.

In some embodiments, the ECU 301 or processing circuitry 710 may be configured to, or may comprise the identifying module 712 configured to, identify that tire sensor readings from each of the tire sensors 111, 121, 131, 141, 151, 161 has been received in a sequential order that correspond to a determined order comprised in the ECU 301, e.g. in the memory 720. In this case, the ECU 301 or processing circuitry 710 may be configured to, or may comprise the triggering module 713 configured to, trigger the determination of the wheel position A-F on the vehicle 100 associated with each of the tire sensors 111, 121, 131, 141, 151, 161 based on the identification. Optionally, according to some embodiments, the ECU 301 or processing circuitry 710 may be configured to, or may comprise the triggering module 713 configured to, trigger the determination of the wheel position A-F on the vehicle 100 associated with each of the tire sensors 111, 121, 131, 141, 151, 161 based on an obtained input signal.

Furthermore, the embodiments for locating tire sensors 111, 121, 131, 141, 151, 161 of wheels 110, 120, 130, 140, 150, 160 on a vehicle 100 described above may be at least partly implemented through one or more processors, such as, the processing circuitry 710 in the ECU 301 depicted in Fig. 7, together with computer program code for performing at least parts of the functions and actions of the embodiments herein. The program code mentioned above may also be provided as a computer program product, for instance in the form of a data carrier carrying computer program code or code means for performing the embodiments herein when being loaded into the processing circuitry 710 in the ECU 301. The data carrier, or computer readable medium, may be one of an electronic signal, optical signal, radio signal or computer-readable storage medium. The computer program code may e.g. be provided as pure program code in the ECU 301 or on a server and downloaded to the ECU 301. Thus, it should be noted that the operations of the ECU 301 may in some embodiments be implemented as computer programs stored in the memory 720 in Fig. 7, e.g. the computer readable storage unit/module, for execution by processors or processing modules, e.g. the processing circuitry 710 in Fig. 7. Those skilled in the art will also appreciate that the processing circuitry 710 and the memory 720 described above may refer to a combination of analog and digital circuits, and/or one or more processors configured with software and/or firmware, e.g. stored in a computer readable storage unit/module, that when executed by the one or more processors such as the processing circuitry 710 perform as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

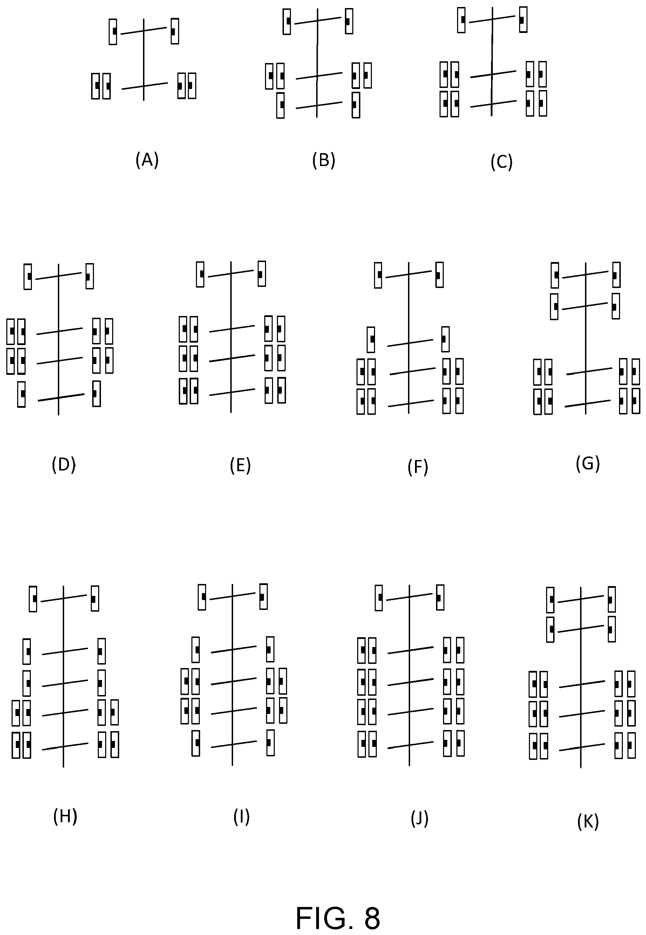

**Fig. 8** illustrates a number of examples of vehicle tire configurations A-K on which a ground obstacle system 200 for locating tire sensors in a wheel of a vehicle may be based. These are provided here only as illustrative examples and should not be construed as limiting to the number of vehicle tire configurations on which the ground obstacle system 200 may be based.

The description of the example embodiments provided herein have been presented for purposes of illustration. The description is not intended to be exhaustive or to limit example embodiments to the precise form disclosed, and modifications and variations are possible in light of the above teachings or may be acquired from practice of various alternatives to the provided embodiments. The examples discussed herein were chosen and described in order to explain the principles and the nature of various example embodiments and its practical application to enable one skilled in the art to utilize the example embodiments in various manners and with various modifications as are suited to the particular use contemplated. The features of the embodiments described herein may be combined in all possible combinations of methods, apparatuses, modules, systems, and computer program products. It should be appreciated that the example embodiments presented herein may be practiced in any combination with each other.

It should be noted that the word "comprising" does not necessarily exclude the presence of other elements or steps than those listed and the words "a" or "an" preceding an element do not exclude the presence of a plurality of such elements. It should further be noted that any reference signs do not limit the scope of the claims, that the example embodiments may be implemented at least in part by means of both hardware and software, and that several "means", "units" or "devices" may be represented by the same item of hardware.

It should also be noted that the various example embodiments described herein are described in the general context of method steps or processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes. The embodiments herein are not limited to the above described preferred embodiments. Various alternatives and modifications may be used. Therefore, the above embodiments should not be construed as limiting.

## Claims

1. A ground obstacle system (200) for locating tire sensors (111; 121; 131; 141; 151; 161) of wheels (110; 120; 130, 140; 150; 160) on a vehicle (100), wherein the ground obstacle system (200) is adapted to cause tire deformation in tires of the wheels (110; 120; 130, 140; 150; 160) on a vehicle (100) as the wheels (110; 120; 130, 140; 150; 160) of the vehicle (100) traverses the ground obstacle system (200), and wherein ground obstacles (201) of the ground obstacle system (200) are arranged in a determined geometric pattern that causes a determined set of sequential tire deformations in the tires of the wheels (110; 120; 130, 140; 150; 160) of the vehicle (100) triggering sequential tire sensor readings by tire sensors (111; 121; 131; 141; 151; 161) in each tire or wheel (110; 120; 130, 140; 150; 160) of the vehicle (100), **characterized in that**
the ground obstacle system (200) is arranged in cylindrical rollers (710; 720) arranged to support the tires as the wheels (110; 110; 120; 130, 140; 150; 160) traverses the surface of the cylindrical rollers (510; 720).

2. The ground obstacle system (200) according to claim 1, wherein the minimum distances between individual ground obstacles (201) of the ground obstacle system (200) are adapted to the circumference of the wheels (110; 120; 130, 140; 150; 160) of the vehicle (100) for which it is intended to be used.

3. The ground obstacle system (200) according to claim 2, wherein the minimum distances is about one fourth of the circumference of the wheels (110; 120; 130, 140; 150; 160) of the vehicle (100), or larger.

4. The ground obstacle system (200) according to any of claims 1-3, wherein one or more of the individual ground obstacles (201) of the ground obstacle system (200) are movably arranged in order to adapt the distance between one or more individual ground obstacles (201) of the ground obstacle system (200).

5. The ground obstacle system (200) according to any of claims 1-4, wherein the tire sensors (111; 121; 131; 141; 151; 161) on the vehicle (100) are tire pressure and/or tire deformation sensors.

## Patentansprüche

1. Bodenhindernissystem (200) zum Lokalisieren von Reifensensoren (111; 121; 131; 141; 151; 161) von Rädern (110; 120; 130; 140; 150; 160) an einem Fahrzeug (100), wobei das Bodenhindernissystem (200) dazu angepasst ist, eine Reifenverformung in Reifen der Räder (110; 120; 130; 140; 150; 160) an einem Fahrzeug (100) zu veranlassen, während die Räder (110; 120; 130; 140; 150; 160) des Fahrzeugs (100) das Bodenhindernissystem (200) durchquert, und wobei Bodenhindernisse (201) des Bodenhindernissystems (200) in einem bestimmten geometrischen Muster angeordnet sind, das einen bestimmten Satz aufeinanderfolgender Reifenverformungen in den Reifen der Räder (110; 120; 130; 140; 150; 160) des Fahrzeugs (100) veranlasst, was aufeinanderfolgende Reifensensorablesungen durch Reifensensoren (111; 121; 131; 141; 151; 161) in jedem Reifen oder Rad (110; 120; 130; 140; 150; 160) des Fahrzeugs (100) auslöst, **dadurch gekennzeichnet, dass**
das Bodenhindernissystem (200) in zylindrischen Rollen (710; 720) angeordnet ist, die dazu angeordnet sind, die Reifen zu stützen, während die Räder (110; 110; 120; 130; 140; 150; 160) die Oberfläche der zylindrischen Rollen (510; 720) durchquert.

2. Bodenhindernissystem (200) nach Anspruch 1, wobei die Mindestabstände zwischen einzelnen Bodenhindernissen (201) des Bodenhindernissystems (200) an den Umfang der Räder (110; 120; 130; 140; 150; 160) des Fahrzeugs (100) angepasst sind, für das es dazu vorgesehen ist, verwendet zu werden.

3. Bodenhindernissystem (200) nach Anspruch 2, wobei die Mindestabstände ungefähr ein Viertel des Umfangs der Räder (110; 120; 130; 140; 150; 160) des Fahrzeugs (100) oder größer ist.

4. Bodenhindernissystem (200) nach einem der Ansprüche 1-3, wobei ein oder mehrere der einzelnen Bodenhindernisse (201) des Bodenhindernissystems (200) bewegbar angeordnet sind, um den Abstand zwischen einem oder mehreren einzelnen Bodenhindernissen (201) des Bodenhindernissystems (200) anzupassen.

5. Bodenhindernissystem (200) nach einem der Ansprüche 1-4, wobei die Reifensensoren (111; 121; 131; 141; 151; 161) an dem Fahrzeug (100) Reifendruck- und/oder Reifenverformungssensoren sind.

## Revendications

1. Système d'obstacle au sol (200) pour localiser des capteurs de pneu (111 ; 121 ; 131 ; 141 ; 151 ; 161) de roues (110 ; 120 ; 130, 140 ; 150 ; 160) sur un véhicule (100), dans lequel le système d'obstacle au sol (200) est adapté pour provoquer une déformation de pneu dans des pneus des roues (110 ; 120 ; 130, 140 ; 150 ; 160) sur un véhicule (100) à mesure que chaque roue (110 ; 120 ; 130, 140 ; 150 ; 160) du véhicule (100) traverse le système d'obstacle au sol (200), et dans lequel des obstacles au sol (201) du système d'obstacle au sol (200) sont agencés selon un motif géométrique déterminé qui provoque un ensemble déterminé de déformations de pneu séquentielles dans les pneus des roues (110 ; 120 ; 130, 140 ; 150 ; 160) du véhicule (100) déclenchant des lectures séquentielles de capteur de pneu par des capteurs de pneu (111 ; 121 ; 131 ; 141 ; 151 ; 161) dans chaque pneu ou roue (110 ; 120 ; 130, 140 ; 150 ; 160) du véhicule (100), **caractérisé en ce que**
le système d'obstacle au sol (200) est disposé au niveau de rouleaux cylindriques (710 ; 720) agencés pour supporter les pneus à mesure que les roues (110 ; 110 ; 120 ; 130, 140 ; 150 ; 160) traversent la surface des rouleaux cylindriques (510 ; 720).

2. Système d'obstacle au sol (200) selon la revendication 1, dans lequel les distances minimales entre des obstacles au sol (201) individuels du système d'obstacle au sol (200) sont adaptées à la circonférence des roues (110 ; 120 ; 130, 140 ; 150 ; 160) du véhicule (100) pour lequel il est destiné à être utilisé.

3. Système d'obstacle au sol (200) selon la revendication 2, dans lequel la distance minimale est d'environ un quart de la circonférence des roues (110 ; 120 ; 130, 140 ; 150 ; 160) du véhicule (100), ou plus grande.

4. Système d'obstacle au sol (200) selon l'une quelconque des revendications 1 à 3, dans lequel un ou plusieurs des obstacles au sol (201) individuels du système d'obstacle au sol (200) sont agencés de façon mobile afin d'adapter la distance entre un ou plusieurs obstacles au sol (201) individuels du système d'obstacle au sol (200).

5. Système d'obstacle au sol (200) selon l'une quelconque des revendications 1 à 4, dans lequel les capteurs de pneu (111 ; 121 ; 131 ; 141 ; 151 ; 161) sur le véhicule (100) sont des capteurs de pression de pneu et/ou de déformation de pneu.
